Europäisches Patentamt

European Patent Office

Office européen des brevets

(11) Numéro de publication : **0 454 514 A1**

# (12) DEMANDE DE BREVET EUROPEEN

(21) Numéro de dépôt : **91400788.5**

(51) Int. Cl.⁵ : **H04N 7/00, H04N 11/02**

(22) Date de dépôt : **22.03.91**

(30) Priorité : **23.03.90 FR 9003756**

(43) Date de publication de la demande :
**30.10.91 Bulletin 91/44**

(84) Etats contractants désignés :
**DE GB**

(71) Demandeur : **FRANCE TELECOM**
**6 place d'Alleray**
**F-75015 Paris (FR)**
Demandeur : **TELEDIFFUSION DE FRANCE**
**10, rue d'Oradour sur Glane**
**F-75015 Paris (FR)**

(72) Inventeur : **Bechet, Guy**
**23, rue Emile Bernard**
**F-35700 Rennes (FR)**
Inventeur : **Bernard, Philippe**
**175, rue de Belle Epine**
**F-35510 Cesson (FR)**

(74) Mandataire : **Fort, Jacques**
**CABINET PLASSERAUD 84, rue d'Amsterdam**
**F-75009 Paris (FR)**

(54) **Procédé et dispositif de codage d'images de télévision à sélection entre plusieurs voies de codage.**

(57) Des images de télévision à haute définition sont fractionnées en blocs identiques, chaque bloc étant appliqué à plusieurs voies de codage en parallèle mettant en oeuvre des modes de codage différents dont un premier est à résolution spatiale élevée et met en oeuvre des techniques de filtrage spatio-temporel, et au moins un autre est à résolution spatiale réduite et résolution temporelle accrue. Une sélection est effectuée avant transmission entre les résultats des modes de codage, par comparaison entre chaque bloc d'image reconstitué à partir des images codées et le bloc d'image source respectif. Les blocs d'image source sont soumis, mais uniquement avant comparaison avec les blocs respectifs reconstitués après codage par le premier mode, à un filtrage spatial faisant intervenir plusieurs points voisins de l'ensemble de l'image dans le bloc.

EP 0 454 514 A1

FIG.1.

Source

1250 lignes
50/2:1

14 → Voie de traitement 20ms

12 → Voie de traitement 40ms

10 → Voie de traitement 80ms

30

16

18

Coût 20ms  24

Coût 40ms  26

Coût 80ms  28

20

Décision a posteriori

vers décision finale

22 → Décision a priori

EP 0 454 514 A1

# PROCEDE ET DISPOSITIF DE CODAGE D'IMAGES DE TELEVISION A SELECTION ENTRE PLUSIEURS VOIES DE CODAGE

L'invention concerne les procédés et dispositifs de codage d'images en vue de leur transmission et elle trouve une application particulièrement importante dans le domaine de la télévision à haute définition.

La transmission de programmes de télévision haute définition, notamment par le processus désigné par l'abréviation HD-MAC, dans lequel la transmission s'effectue sous forme d'un multiplex de signaux numériques de son et de données et de signaux analogiques d'image, exige de mettre en oeuvre, à l'émission, une technique de compression réduisant la largeur de bande à celle disponible sur les canaux de transmission.

Une technique permettant de réduire la dégradation de l'image provoquée par la réduction de bande passante consiste à découper l'image en blocs de taille fixe, par exemple de seize lignes de seize points (c'est-à-dire de huit lignes de seize points par trame en cas d'image entrelacée), à soumettre chaque bloc à trois modes de codage différents, dont un au moins est particulièrement bien adapté aux images fixes, et à sélectionner, pour chaque bloc et avant diffusion, celle des représentations codées qui assure le meilleur rendu possible.

A titre d'exemples de modes de codage, utilisant des structures de sous-échantillonnage différentes, on peut citer celles prévues pour la diffusion suivant la norme HD-MAC, dont on trouvera une description dans divers documents, qui définissent plusieurs implémentations possibles du processus de base. Parmi ces documents, on peut citer l'article de P. Bernard et autres, "Analyse de structures de sous-échantillonnage spatio-temporel d'un signal TVHD en vue de sa transmission dans un canal MAC", Colloque TVHD 87, 4-8 octobre 1989, Ottawa ; le document W0-A-89/10040 ; et la demande de brevet FR n° 89 12410.

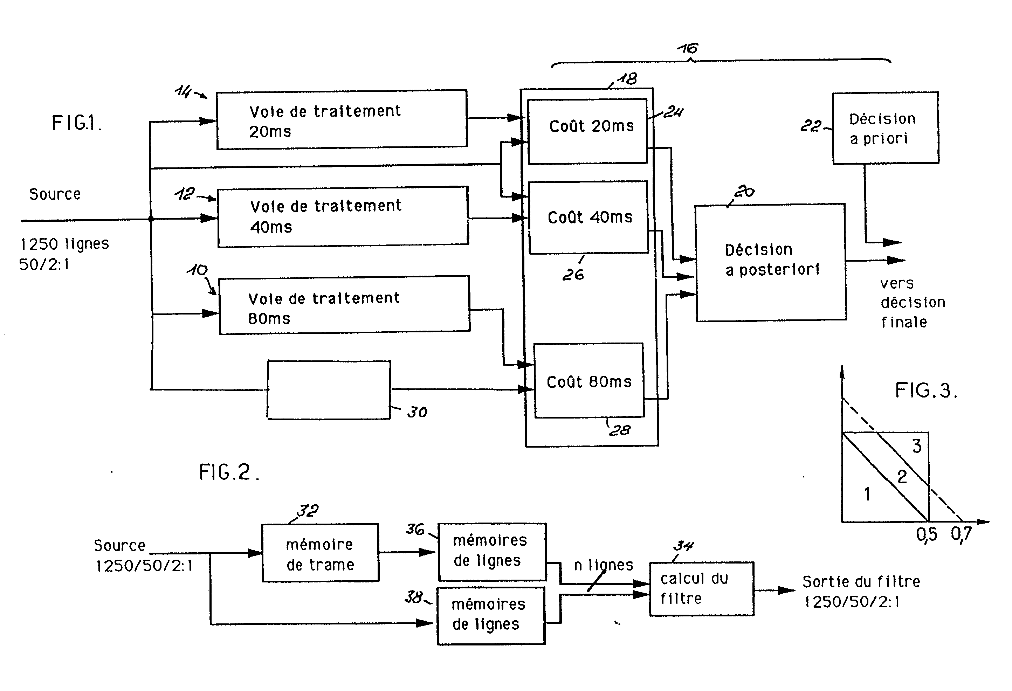

Un dispositif de codage mettant en oeuvre les principes exposés dans ces trois documents est représenté schématiquement sur la Figure 1. Il comprend trois voies de traitement en parallèle de l'image en provenance d'une source, qui toutes divisent par quatre la quantité d'informations à transmettre.

Une première voie 10, dite en mode 80 ms, met en oeuvre des opérations de préfiltrage et répartit, entre quatre trames successives de transmission, les échantillons retenus dans une même image, (c'est-à-dire dans l'image à un instant donné) disposés en quinconce dans l'image haute définition. Cette structure est bien adaptée aux zones fixes ou à très faible activité temporelle de l'image.

Une seconde voie 12, dite en mode 40 ms, écarte une trame sur deux. Elle met en oeuvre des opérations de préfiltrage et des opérations de post-traitement (interpolation et détermination d'un vecteur indiquant la direction et l'amplitude du mouvement). Cette voie est bien adaptée aux blocs de l'image présentant une activité temporelle compensable, à la réception, en utilisant le vecteur mouvement transmis dans des données d'assistance.

La troisième voie 14, dite en mode 20 ms, retient uniquement un point sur deux de la structure utilisée pour le mode 80 ms et met en oeuvre uniquement des opérations de préfiltrage.

Un circuit de sélection 16 reçoit d'une part la sortie des trois voies de traitement et d'autre part le signal source, retardé d'une durée correspondant au temps de transit à travers les voies. Ce circuit de sélection comporte un jeu 18 de trois modules déterminant chacun le "coût" en distorsion d'un mode correspondant et un circuit de décision 20. Les modules effectuent un calcul d'erreur quadratique sur chacun des blocs de base par comparaison entre le signal source et le signal traité, puis reconstruit. Le circuit de décision 20 retient le mode de traitement correspondant à la distorsion minimale et insère son identification dans des données d'assistance diffusées dans la partie numérique du multiplex. Un exemple de circuit de ce type est donné dans le document EP-A-0 330 279 ou W0-A-89/10040. Un module de sélection a priori 22 permet de forcer le mode 20 ms lorsque l'amplitude du mouvement dépasse un niveau déterminé.

Ce mode de sélection, satisfaisant en principe, présente dans la réalité un défaut grave, dû à ce que la voie en mode 80 ms met en oeuvre des techniques de filtrage spatio-temporel et des techniques d'intégration temporelle à la reconstruction qui filtrent le bruit dû à la source. En conséquence, l'image reconstruite à partir de la voie en mode 80 ms est relativement exempte du bruit qui affecte l'image d'origine. Si ce bruit, dû par exemple à une qualité insuffisante de la source, est important, il est interprété par le circuit de calcul et de décision comme un mouvement de l'image. Une image fixe, mais affectée de bruit, est alors émise dans un mode autre que le mode 80 ms et l'image finale reconstruite dans le récepteur est restituée avec une résolution spatiale faible, correspondant au mode 40 ou 20 ms, et non avec la résolution spatiale maximale que donne la voie 80 ms, mieux appropriée aux blocs fixes de l'image.

Cette situation n'est nullement hypothétique : elle se présente par exemple lorsque la source est un magnétoscope haute définition analogique, présentant un niveau de bruit important, ou lorsque la source est une caméra haute définition observant une scène très peu éclairée, ce qui oblige à adopter un gain d'amplification élevé.

3

L'invention vise à fournir un procédé et un dispositif visant à réduire l'effet défavorable du bruit de source dans le processus de sélection mis en oeuvre.

L'invention propose dans ce but un procédé de codage d'images de télévision, suivant lequel les images successives sont fractionnées en blocs identiques, chaque bloc étant appliqué à plusieurs voies de codage en parallèle mettant en oeuvre des modes de codage différents dont un premier est à résolution spatiale élevée et met en oeuvre des techniques de filtrage spatio-temporel, et au moins un autre est à résolution spatiale réduite et résolution temporelle accrue, et une sélection est effectuée avant transmission entre les résultats des modes de codage, par comparaison entre chaque bloc d'image reconstitué à partir des images codées et le bloc d'image source respectif,

caractérisé en ce que les blocs d'image source sont soumis, mais uniquement avant comparaison avec les blocs respectifs reconstitués après codage par le premier mode, à un filtrage spatial faisant intervenir plusieurs points voisins de l'ensemble de l'image dans le bloc.

Si le signal source est à balayage entrelacé, le filtrage spatial s'effectue en conséquence sur la trame courante en phase avec celle de la première voie et sur la trame suivante, avec une pondération faible sur les points de la trame suivante, pour obtenir un bon rendu des mouvements. Dans la pratique, la somme des coefficients de pondération affectés aux points de la trame suivante seront en moyenne compris entre 0,01 et 0,2 de la somme de ceux de la trame courante.

L'ouverture spatiale est de quelques points et quelques lignes par image, par exemple de $\pm$ 6 points et $\pm$ 6 lignes par image. L'utilisation d'un filtrage spatial dans l'image permet de respecter le contenu fréquentiel et de ne pas affecter, dans un bloc où l'image est fixe, les zones présentant des hautes fréquences spatiales.

Un tel pré-filtrage spatial réduit le bruit de source en vue du calcul d'erreur quadratique mais conserve un bon rendu des mouvements, (ce qui ne serait pas le cas si un pré-filtre temporel était utilisé) et évite des sélections erronées du mode 80 ms, que provoquerait une réduction de l'erreur quadratique due à un filtrage temporel sur plusieurs images.

L'invention propose également un dispositif permettant de mettre en oeuvre le procédé ci-dessus défini, comprenant des moyens permettant de décomposer chaque image successives en blocs identiques d'une image à la suivante, deux voies au moins de traitement en parallèle recevant les blocs et mettant en oeuvre des modes de codage différents dont un à interpolation, donnant une résolution spatiale élevée et au moins une autre voie à résolution spatiale réduite, et un bloc de sélection comportant : des moyens de reconstruction de chaque bloc à partir de l'image codée fournie par chacune des voies ; des moyens de comparaison entre chacun des blocs reconstitués et le bloc respectif de l'image source et de calcul de distorsion ; et des moyens de décision et d'aiguillage, vers une chaîne de transmission, de la sortie de la voie pour lequel la distorsion est la plus faible, caractérisé par un bloc de filtrage spatial dans l'image interposé sur le trajet de transmission de l'image source vers les moyens de comparaison avec les blocs reconstitués à partir de la voie à résolution spatiale élevée et vers eux seuls.

Dans le cas où l'image source est explorée par balayage entrelacé, le bloc de filtrage spatial dans l'image fait intervenir à la fois la trame courante et la trame suivante avec une pondération faible pour la trame suivante afin de tenir compte de ce que les blocs reconstruits proviennent d'une image prélevée à un instant déterminé, alors que deux des trames proviennent d'image "source" à des instants successifs. Dans le cas au contraire où l'image source fait l'objet d'un balayage séquentiel, la trame courante représente la totalité de l'image et le problème du poids respectif accordé à deux trames de la même image ne se pose plus.

L'invention sera mieux comprise à la lecture de la description qui suit d'un mode particulier de réalisation donné à titre d'exemple non limitatif. La description se réfère aux dessins qui l'accompagnent, dans lesquels :

– la figure 1, déjà mentionnée, montre schématiquement les composants concernés par l'invention d'un dispositif de codage ;

– la figure 2 montre une constitution possible de blocs de filtrage spatial utilisables dans le dispositif de la figure 1, dans le cas d'une image haute définition à entrelacements 2:1.

– la figure 3 montre un exemple de gabarit de filtrage.

On supposera dans ce qui suit, pour simplifier, que le dispositif de codage est destiné à une installation de transmission suivant le processus HD-MAC à 1250 lignes, 50 Hz et entrelacements 2:1. Mais l'invention serait tout aussi bien applicable à une image présentant un nombre de lignes différent, à la fréquence de 60 Hz, et/ou à balayage séquentiel.

Dans le dispositif de codage montré en figure 1, les modules 24, 26 et 28 affectés respectivement aux voies en modes 20 ms, 40 ms et 80 ms, sont prévus pour effectuer un calcul d'erreur quadratique pour chaque période de trame, c'est-à-dire pour chaque période de 20 ms et le circuit de décision 20 écarte la voie en mode 80 ms dès que la comparaison est défavorable au mode 80 ms pour au moins une période de 20 ms. Ce premier critère tend déjà à pénaliser le mode 80 ms.

Les modules 24 et 26 effectuent le calcul de distorsion en comparant l'image codée, puis reconstituée, à l'image source en l'état.

Conformément à l'invention, le module 28 reçoit le signal représentatif de l'image source après filtrage spatial dans un bloc de filtrage 30 permettant de réduire l'incidence du bruit dans la comparaison.

Etant donné que le module 28 effectue une comparaison entre deux trames de transmission correspondant à une image explorée au même instant et deux trames d'exploration successives, le filtrage spatial doit faire intervenir la trame courante de l'image source et la trame suivante, avec une pondération faible à la trame suivante.

Du fait de l'utilisation de deux trames de l'image source qui se succèdent temporellement, le bloc de filtrage 30 doit comporter une mémoire de trame permettant de disposer de deux trames successives. Ce bloc peut avoir la constitution de principe montrée en figure 2 et comporter deux branches, dont l'une contient la mémoire de trame 32, attaquant un circuit de calcul 34 dans lequel sont mémorisés les coefficients de pondération. Les deux branches contiennent des mémoires de ligne 36 et 38 dont la capacité correspond au nombre de lignes $\underline{n}$ qui interviennent dans le filtrage. Dans la pratique, on obtient généralement de bons résultats avec un filtre en diamant dont l'ouverture spatiale en lignes et en pixels est comprise entre 7 et 19. En particulier, des essais avec une ouverture spatiale de $\pm 6$ points par ligne et $\pm 6$ lignes par image ont donnés de bons résultats.

Le gabarit de filtrage doit présenter une bande d'atténuation située au-delà de la limite théorique de la première voie (voie 80 ms dans l'exemple donné). Il peut être celui dont un quart est schématisé sur la figure 3, en représentation de Fourier. La zone 1 correspond à la bande passante, la zone 2 à une transition, la zone 3 à l'atténuation. Il est de beaucoup préférable qu'il n'y ait aucune atténuation jusqu'à la limite de 0,5. Les contraintes en matière de raideur sont moindres. Cependant il est avantageux de choisir les coefficients pour que l'ondulation dans la bande passante ne dépasse pas 0,06 dB et que l'atténuation soit de -40 dB au moins.

A titre d'exemple de coefficients permettant dans ce cas d'obtenir un filtre en diamant, on peut citer ceux du tableau suivant, qui correspondent à un quart du filtre ; les coefficients des lignes 1, 3, 5 et 7 sont ceux affectés à la trame courante ; ceux des lignes 2, 4 et 6 appartiennent à la trame suivante ; la matrice de coefficients a une symétrie diagonale.

| 1384 | 369 | -32 | 15 | -14 | -2 | -4 |
| 369 | -114 | -72 | 21 | -1 | 10 | 1 |
| -32 | -72 | 104 | 1 | -11 | -3 | -4 |
| 15 | 21 | 1 | -55 | 17 | 3 | 2 |
| -14 | -1 | -11 | 17 | 19 | -14 | -1 |
| -2 | 10 | -3 | 3 | -14 | -2 | 7 |
| -4 | 1 | -4 | 2 | -1 | 7 | 0 |

Des essais ont été effectués pour déterminer l'effet de la mise en oeuvre de l'invention dans des conditions de prise de vue représentatives. L'invention n'apporte pratiquement aucune dégradation par augmentation du taux de transmission en mode 80 ms, au détriment , des modes 20 et 40 ms, lorsque la source présente peu de bruit. Elle donne des résultats très favorables lorsque cette source est affectée d'un bruit important, qui a été créé artificiellement en réduisant l'ouverture de la caméra de prise de vue et en augmentant corrélativement le gain.

## Revendications

1. Procédé de codage d'images de télévision , suivant lequel les images successives sont fractionnées en blocs identiques, chaque bloc étant appliqué à plusieurs voies de codage en parallèle mettant en oeuvre des modes de codage différents dont un premier est à résolution spatiale élevée et met en oeuvre des techniques de filtrage spatio-temporel, et au moins un autre est à résolution spatiale réduite et résolution temporelle accrue, et une sélection est effectuée avant transmission entre les résultats des modes de codage, par comparaison entre chaque bloc d'image reconstitué à partir des images codées et le bloc d'image source respectif, caractérisé en ce que les blocs d'image source sont soumis, mais uniquement avant comparaison avec les blocs respectifs reconstitués après codage par le premier mode, à un filtrage spatial faisant intervenir plusieurs points voisins de l'ensemble de l'image dans le bloc.

2. Procédé selon la revendication 1, caractérisé en ce que, l'image source étant analysée par balayage entrelacé, le filtrage spatial est effectué sur la trame courante et sur la trame suivante, avec une pondération beaucoup plus faible sur les points de la trame suivante que sur les points de la trame courante.

3. Procédé selon la revendication 1 ou 2, caractérisé en ce que l'ouverture spatiale de filtrage est de quelques points et de quelques lignes par image.

4. Procédé selon la revendication 3, caractérisé en ce que l'ouverture spatiale est d'environ ± 6 points par ligne et ± 6 lignes par image.

5. Procédé selon la revendication 3 ou 4, caractérisé en ce que la bande passante de filtrage est de type diamant.

6. Dispositif de codage d'images de télévision permettant de mettre en oeuvre le procédé suivant l'une quelconque des revendications précédentes, caractérisé en ce qu'il comprend des moyens permettant de décomposer chaque image successives en blocs identiques d'une image à la suivante, deux voies au moins de traitement en parallèle recevant les blocs et mettant en oeuvre des modes de codage différents dont un à interpolation, donnant une résolution spatiale élevée et au moins une autre voie à résolution spatiale réduite, et un bloc de sélection comportant : des moyens de reconstruction de chaque bloc à partir de l'image codée fournie par chacune des voies ; des moyens de comparaison entre chacun des blocs reconstitués et le bloc respectif de l'image source et de calcul de distorsion ; et des moyens de décision et d'aiguillage, vers une chaîne de transmission, de la sortie de la voie pour lequel la distorsion est la plus faible, caractérisé par un bloc de filtrage spatial dans l'image interposé sur le trajet de transmission de l'image source vers les moyens de comparaison avec les blocs reconstitués à partir de la voie à résolution spatiale élevée et vers eux seuls.

FIG.1.

EP 0 454 514 A1

**16**

**18**

Source

1250 lignes
50/2:1

**14**  Voie de traitement
20ms

**12**  Voie de traitement
40ms

**10**  Voie de traitement
80ms

**30**

**24**  Coût 20ms

**26**  Coût 40ms

**28**  Coût 80ms

**22**  Décision
a priori

**20**  Décision
a posteriori

vers
décision
finale

FIG.3.

1

2

3

0,5  0,7

FIG.2.

Source
1250/50/2:1

**32**  mémoire
de trame

**36**  mémoires
de lignes

**38**  mémoires
de lignes

n lignes

**34**  calcul du
filtre

Sortie du filtre
1250/50/2:1

Office européen
des brevets

## RAPPORT DE RECHERCHE EUROPEENNE

Numero de la demande

EP    91 40 0788

| | DOCUMENTS CONSIDERES COMME PERTINENTS | | |
|---|---|---|---|
| Catégorie | Citation du document avec indication, en cas de besoin, des parties pertinentes | Revendication concernée | CLASSEMENT DE LA DEMANDE (Int. Cl.5 ) |
| A | EP-A-0352964 (BRITISH BROADCASTING CORPORATION) * colonne 7, ligne 27 - colonne 9, ligne 12; figure 5 * | 1-6 | H04N7/00 H04N11/02 |
| D,A | EP-A-0330279 (LABORATOIRES D'ELECTRONIQUE ET DE PHYSIQUE APPLIQUEE L.E.P.) * page 5, ligne 2 - page 6, ligne 33; figures 2-4 * | 1-6 | |
| D | & WO-A-8910040 | | |

DOMAINES TECHNIQUES RECHERCHES (Int. Cl.5 )

H04N7/00
H04N11/00

Le présent rapport a été établi pour toutes les revendications

| Lieu de la recherche | Date d'achèvement de la recherche | Examinateur |
|---|---|---|
| BERLIN | 19 JUIN 1991 | DUDLEY C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................
& : membre de la même famille, document correspondant

EPO FORM 1503 03.82 (P0402)